## Europäisches Patentamt
## European Patent Office
## Office européen des brevets

(19)

(11) Numéro de publication: **0 178 204**
**B1**

(12) **FASCICULE DE BREVET EUROPEEN**

(45) Date de publication du fascicule du brevet: **25.04.90**

(51) Int. Cl.⁵: **B 01 D 53/04,** B 01 J 20/34, B 05 B 15/12

(21) Numéro de dépôt: **85401766.2**

(22) Date de dépôt: **11.09.85**

(54) **Procédé de régénération des caissons filtrants des cabines de peinture et installation pour sa mise en oeuvre.**

(30) Priorité: **01.10.84 FR 8415043**

(43) Date de publication de la demande: **16.04.86 Bulletin 86/16**

(45) Mention de la délivrance du brevet: **25.04.90 Bulletin 90/17**

(84) Etats contractants désignés: **AT BE CH DE GB IT LI LU NL SE**

(56) Documents cités:
**DE-A-2 723 988**
**FR-A-2 564 331**
**GB-A-2 024 041**
**US-A-3 395 972**

(73) Titulaire: **O.M.I.A. Société dite:**
**73,75 rue de l'Epineuil**
**F-16710 Saint-Yrieix Sur Charente (FR)**

(72) Inventeur: **Martin, Guy**
**92, rue Jean Jaurès**
**16600 Magnac (FR)**

(74) Mandataire: **Armengaud Ainé, Alain**
**Cabinet ARMENGAUD AINE 3 Avenue Bugeaud**
**F-75116 Paris (FR)**

Courier Press, Leamington Spa, England.

## Description

La présente invention concerne les cabinets de peinture, et elle a plus particulièrement pour objet un procédé de régénération du charbon actif des caissons filtrants utilisés pour désodoriser l'air extrait de telles cabines pendant la phase de travail.

On sait que les cabines de peinture sont des enceintes fermées, utilisées pour appliquer des peintures et des vernis sur des objets, notamment des véhicules, et pour cuire ou sécher ces peintures. On conçoit que l'un des problèmes les plus importants à résoudre, lors de l'utilisation de telles cabines, réside dans l'épuration de l'air qui est rejeté à l'extérieur du bâtiment où est implantée la cabine de peinture.

L'air extrait d'une cabine de peinture contient deux types de produits, qui, en fait, constituent les composants de ces peintures. Il s'agit, d'une part, de composants solides, constitués par les pigments, et, d'autre part, de composants volatils, constitués par les solvants.

Dans les installations actuelles, les pigments sont retenus, avant leur rejet dans l'atmosphère, par des systèmes mécaniques connus, notamment filtrage sec ou filtrage par voie humide, et les composants volatils sont rejetés vers l'extérieur généralement sans traitement. Bien que la concentration de ces composants volatils soit relativement faible, il n'en résulte pas moins que leur rejet vers l'extérieur dégage des odeurs pouvant constituer une gêne pour le voisinage, notamment en zone urbaine.

Pour pallier cet inconvénient, certaines installations sont munies d'un dispositif retenant les composants volatils, qui est généralement réalisé sous la forme d'un caisson contenant des filtres à charbon actif, placé sur le circuit d'évacuation de l'air provenant de la cabine. En traversant ce filtre, le charbon actif désodorise en partie l'air rejeté.

On conçoit que le procédé actuellement utilisé ne peut donner de bons resultats que dans la mesure où le charbon actif n'est pas sature. Or, cette saturation se réalise rapidement, et les filtres laissent progressivement "passer" les odeurs. Pour pallier les inconvénients resultant d'une saturation des filtres à charbon actif, il est nécessaire d'effectuer une regenèration périodique des charbons des caissons filtrants. A cet effet, la solution actuellement connue consiste à faire traverser le charbon par un flux de vapeur, qui, à son tour, doit être traite. Cette operation est généralement effectuée dans des usines spécialisées, ce qui augmente les coûts et oblige à l'achat de deux jeux de rechange de charbon pour éviter un arrêt de la cabine pendant la régénération.

On connaît (US—A—3 395 972) une installation de régénération des filtres retenant les composants volatils dans les caissons filtrants des cabines de peinture qui comprend: un ventilateur de régénération placé de manière à assurer une extraction de l'air au travers du filtre à régénérer, l'air circulant en sens inverse du sens de circulation pendant la phase de travail, des moyens pour contrôler le débit de l'air de regeneration et des moyens assurant une mise en fonctionnement automatique du ventilateur. Toutefois, une telle installation connue implique un traitement de l'air de regeneration ayant traverse les filtres necessitant des moyens particulièrement complexes et coûteux, afin de permettre une reintroduction de cet air dans la cabine de peinture.

La présente invention se propose d'apporter un procédé de régénération permettant aux cabines de peinture de fonctionner sans rejet d'odeur vers l'extérieur, pendant la phase d'application à grand volume d'air dans un temps court.

Le procédé selon l'invention est caractérisé en ce que, pendant la période d'arrêt de la cabine, le caisson filtrant contenant le charbon actif ayant retenu les solvants durant la phase de travail de la cabine est traversé par une quantité d'air neuf égale à cinq fois la quantité d'air traitee par ce caisson durant la phase de travail de la cabine, et en ce que l'air ayant assuré la régénération du charbon actif est rejeté directement dans l'atmosphere, sans traitement.

Selon une autre caractéristique de cette invention, l'air assurant la régénération du charbon actif circule dans les filtres du caisson à une vitesse inférieure à 0,30 m/s, pendant la phase de régénération.

On comprend que le procédé de régénération objet de l'invention régénère le charbon des filtres par laminage de l'air: le charbon actif, après avoir retenu une certaine quantité de solvants, restitue sensiblement cette même quantité de solvants à volume dilué d'environ 5 fois lorsqu'il est traversé par l'air de régénération pendant un laps de temps beaucoup plus long (10 fois plus au minimum). Pendant ce temps, on se situe, au niveau odeur, en-dessous du seuil olfactif perceptible.

Ainsi, un filtre au charbon actif ayant traité 10.000 m3 d'air contenant des solvants et provenant de la cabine de peinture sera régénéré lorsque 50.000 m3 d'air neuf auront traverse ce même filtre, le temps de passage de l'air de régénération étant calculé de manière que les débits de solvants liberes durant la regeneration ne provoquent plus de gêne pour l'usager.

L'invention vise également une installation pour la mise en oeuvre d'un procédé de régénération tel que défin ci-dessus. Cette installation comprend un caisson contenant les filtres retenant les composants volatils et comprenant un ventilateur de régénération placé de manière à assurer une extraction de l'air au travers du charbon à régénérer contenu dans les filtres, l'air circulant en sens inverse du sens de circulation pendant la phase de travail, des moyens pour contrôler le débit de l'air de régénération et des moyens assurant une mise en fonctionnement automatique du ventilateur de régénération et elle est caractérisée en ce que ledit ventilateur de régénération débouche directement sur une conduite d'évacuation de manière que l'air de régénération après avoir traversé les filtres, soit directement rejeté dans l'atmosphère, sans traitement.

D'autres caractéristiques et avantages de cette invention ressortiront de la description faite ci-après en référence aux dessins annexés, qui en illustrent un exemple de réalisation non limitatif. Sur les dessins:

la figure 1 est une representation schématique, en élévation frontale et en coupe verticale, d'une cabine de peinture selon l'invention pendant la phase de travail, c'est-à-dire d'application de la peinture;

la figure 2 est une vue identique à la figure 1, montrant la même cabine de peinture pendant la phase de régénération et;

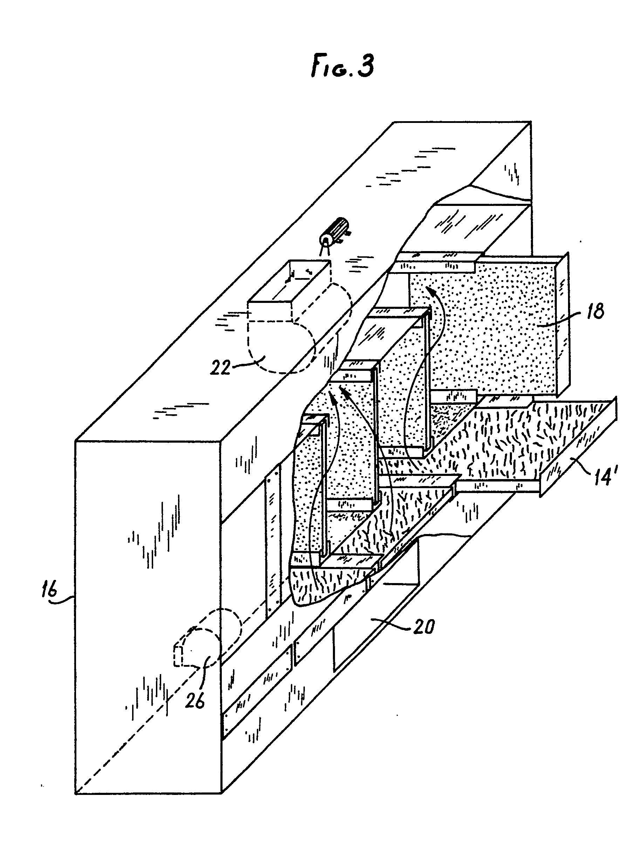

la figure 3 est une vue schématique, en perspective, d'un caisson filtrant au charbon actif auquel s'applique l'invention.

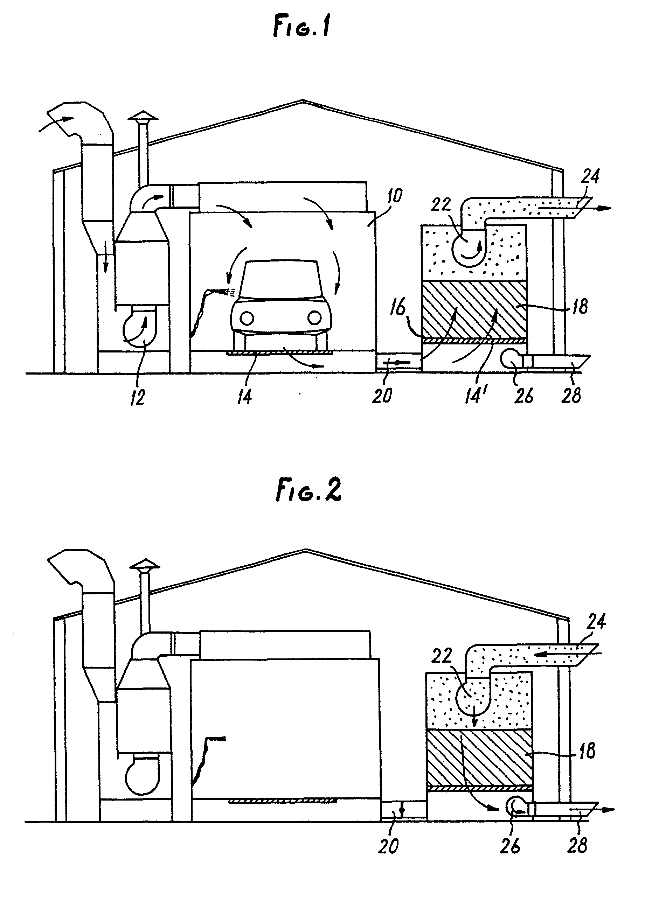

Les figures 1 et 2 représentent schématiquement une cabine de peinture à laquelle s'applique l'invention.

Celle-ci comprend une enceinte étanche 10, recevant l'objet à peindre (ici une voiture), munie d'un ventilateur de soufflage 12 pour l'alimentation en air frais, un filtre d'épuration primaire 14 pour arrêter les parties solides (pigments), et un caisson d'épuration finale 16, contenant des filtres mécaniques 14' complétant l'action des filtres 14, et des filtres à charbon actif 18, l'air chargé de solvants en provenance de la cabine 10 étant amené au caisson 16 par une arrivée 20, munie d'un registre. Le charbon actif des filtres 18 a pour fonction de retenir les parties volatiles, c'est-àdire les solvants, et donc les odeurs. Le caisson 16 comprend en outre un ventilateur d'extraction 22, entraînant l'air épuré vers l'extérieur au travers d'une conduite 24.

Selon l'invention l'installation est complétée par un ventilateur de régénération 26, débouchant sur une conduite d'évacuation 28, et par des éléments de contrôle du procédé de régénération, comprenant notamment un micromanomètre pour le contrôle du débit d'air et un système de commande électronique pour la mise en fonctionnement automatique du ventilateur de régénération 26.

Le caisson de filtres à charbon actif 16 présente donc, selon l'invention, les phases de fonctionnement suivantes:

1 — Phase travail:

La cabine est utilisée pour peindre une automobile, par exemple, comme illustré sur le dessin. L'air extrait de la cabine est donc chargé de pigments de la peintureutilisée et de solvants.

Les pigments sont retenus par les deux étages de filtres: premier étage 14, de type traditionnel, équipant toute cabine de peinture; deuxième étage 14', assurant une filtration plus élaborée pour éviter l'encrassement du charbon actif contenu dans le caisson 16.

Les solvants sont retenus par le charbon actif des filtres 18 du caisson 16, ainsi qu'on 1'a vu ci-dessus.

Pendant cette phase travail, le débit d'air obtenu par le ventilateur 12 est celui nécessaire à la ventilation de la cabine 10.

2 — Phase régénération du charbon actif:

Cette phase commence dès l'arrêt de la phase travail. Les ventilateurs 12 et 22 sont arrêtés, la cabine est isolée du caisson 16 à régénérer par la fermeture du registre de la conduite 20, et le ventilateur de régénération 26 est mis en action. Pendant cette phase de régénération, le caisson et les filtres à charbon actif 18 qu'il contient sont traversés par une quantité d'air neuf (admise par la conduite 24), dont la quantité est égale à 5 fois environ le débit d'air traité pendant la phase travail. Pendant cette phase de régénération, on respecte une vitesse inférieure à 0,30 m/s à travers les filtres, à l'aide d'un micromanomètre.

On étale ainsi dans le temps les rejets de solvants, et donc d'odeurs, ce qui permet d'atteindre des seuils olfactifs extrêmement faibles, en restant en-dessous des normes actuellement autorisées légalement.

Il demeure bien entendu que cette invention n'est pas limitée à l'exemple de réalisation décrit et représenté, mais qu'elle en englobe toutes les variantes.

**Revendications**

1. Procédé de régénération de charbon actif contenu dans les caissons filtrants des cabines de peinture, caractérisé en ce que, pendant la période d'arrêt de la cabine, le caisson filtrant contenant le charbon actif ayant retenu les solvants durant la phase de travail de la cabine est traversé par une quantité d'air neuf égale à cinq fois la quantité d'air traitee par ce caisson durant la phase de travail de la cabine, et en ce que l'air ayant assuré la régénération du charbon actif est rejeté directement dans l'atmosphere sans traitement.

2. Procédé selon la revendication 1, caractérisé en ce que l'air assurant la régénération du charbon actif circule dans les filtres des caissons à une vitesse inférieure à 0,30 m/s pendant la phase de régénération du charbon actif.

3. Installation pour la mise en oeuvre d'un procédé selon l'une des revendications 1 ou 2, qui comprend: un caisson (16) contenant les filtres (18) retenant les composants volatiles et comprenant un ventilateur de régénération (26), placé de manière à assurer une extraction de l'air au travers du charbon à régénérer contenu dans les filtres, l'air circulant en sens inverse du sens de circulation pendant la phase de travail, des moyens pour contrôler le débit de l'air de régénération et des moyens assurant une mise en fonctionnement automatique du ventilateur de régénération, caractérisé en ce que ledit ventilateur de regeneration (26) débouche directement sur une conduite d'evacuation (28), de manière que l'air de régénération, après avoir traversé les filtres (18) est directement rejeté dans l'atmosphere, sans traitement.

**Patentansprüche**

1. Verfahren zur Regenerierung von in Filterkästen von Farbkabinen enthaltener Aktivkohle, dadurch gekennzeichnet, daß während der Stillstandszeit der Kabine der Filterkasten, der die Aktivkohle enthält, die die Lösungsmittel während der Arbeitsphase der Kabine zurückgehalten hat, von einer frischen Luftmenge durchströmt wird, die das Fünffache der Luftmenge beträgt, die von dem Kasten während der Arbeitsphase der Kabine verarbeitet wurde, und daß die Luft, durch die die Regenerierung der Aktivkohle bewirkt wurde, unbehandelt direkt in die Atmosphäre zurückgeleitet wird.

2. Verfahren nach Anspruch 1, dadurch gekennzeichnet, daß die Luft, die die Regenerierung der Aktivkohle bewirkt, in den Filtern der Kästen mit einer Geschwindigkeit von weniger als 0,30 m/s während der Regenerierungsphase der Aktivkohle zirkuliert.

3. Vorrichtung zur Durchführung des Verfahrens nach Anspruch 1 oder 2, umfassend: einen Kasten (16), der die die flüchtigen Bestandteile zurückhaltenden Filter (18) sowie einen Regenerationsventilator (26) enthält, der dergestalt angeordnet ist, daß eine Luftextraktion durch die in den Filtern enthaltene, zu regenerierende Kohle hindurch gewährleistet ist, wobei die Luft entgegengesetzt zur Zirkulationsrichtung während der Arbeitsphase zirkuliert, Einrichtungen zur Steuerung der zur Regenerierung benötigten Luftmenge und Einrichtungen, die eine automatische Inbetriebnahme des Regenerationsventilators gewährleisten, dadurch gekennzeichnet, daß der Regenerationsventilator (26) direkt in eine Abfuhrleitung (28) mündet, so daß die Regenerationsluft nach dem Passieren der Filter (18) unbehandelt direkt in die Atmosphäre zurückgeleitet wird.

## Claims

1. Process for the regeneration of activated charcoal contained in the filter containers of paintcabins, characterised in that, during the paintcabin rest period, the filter container containing the activated charcoal which has retained solvents during the paintcabin working phase has a quantity of new air passed through it equal to five times the quantity of air treated by this filter container during the paintcabin working phase, and in that the air which has been used to regenerate the activated charcoal is released directly into the atmosphere without treatment.

2. Process according to claim 1, characterised in that the air used to regenerate the activated charcoal circulates in the filters in the containers at a speed less than 0.30 m/sec. during the regeneration phase of the activated charcoal.

3. Apparatus for the operation of a process according to one of claims 1 or 2, comprising: a container (16) containing the filters (18) which retain the volatile components and comprising a regeneration ventilator (26), positioned so as to ensure extraction of air through the charcoal to be regenerated contained in the filters, the air circulating in the opposite direction to the direction of circulation during the working phase, means for controlling the rate of flow of regeneration air and means to ensure automatic starting of the regeneration ventilator, characterised in that the said regeneration ventilator (26) opens directly into an evacuation duct (28), so that the regeneration air, after passing through filters ( 18) is released directly into the atmosphere without treatment.

## Fig.1

## Fig.2

1

FIG.3